(19) **Europäisches Patentamt / European Patent Office / Office européen des brevets**

(11) **EP 1 917 564 B1**

(12) **EUROPÄISCHE PATENTSCHRIFT**

(45) Veröffentlichungstag und Bekanntmachung des Hinweises auf die Patenterteilung:
**09.12.2009 Patentblatt 2009/50**

(21) Anmeldenummer: **06775865.6**

(22) Anmeldetag: **17.08.2006**

(51) Int Cl.:
**G05B 19/18** *(2006.01)*  **G05B 19/39** *(2006.01)*

(86) Internationale Anmeldenummer:
**PCT/DE2006/001436**

(87) Internationale Veröffentlichungsnummer:
**WO 2007/022754 (01.03.2007 Gazette 2007/09)**

(54) **VERFAHREN UND VORRICHTUNG ZUR STEUERUNG UND REGELUNG DER STÖSSELBEWEGUNG AN SERVO-ELEKTRISCHEN PRESSEN**

METHOD AND APPARATUS FOR CONTROLLING AND REGULATION OF THE RAM MOVEMENT ON SERVO-ELECTRIC PRESSES

PROCEDE ET DISPOSITIF POUR COMMANDER ET REGULER LE MOUVEMENT DU POUSSOIR SUR DES PRESSES SERVO-ELECTRIQUES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.08.2005 DE 102005040263**

(43) Veröffentlichungstag der Anmeldung:
**07.05.2008 Patentblatt 2008/19**

(73) Patentinhaber: **Müller Weingarten AG**
**88250 Weingarten (DE)**

(72) Erfinder:
• **DARR, Uwe**
**99094 Erfurt (DE)**

• **SCHMIDT, Steffen**
**99198 Urbich (DE)**

(74) Vertreter: **Stern, Wolfgang et al**
**Weidner Stern**
**Patentanwälte**
**Rubianusstrasse 8**
**99084 Erfurt (DE)**

(56) Entgegenhaltungen:
**EP-A2- 1 321 285**      **WO-A-02/082192**
**DE-A1- 19 806 751**     **DE-A1- 19 952 941**
**US-B1- 6 246 201**

**Beschreibung**

Die Erfindung betrifft ein Verfahren zur Steuerung und Regelung der Stößelbewegung an servo-elektrischen Pressen nach dem Oberbegriff des Patentanspruches 1 und eine Vorrichtung zur Durchführung des Verfahrens nach dem Oberbegriff des Patentanspruchs 18.

Stand der Technik

In der DE 196 42 962 A1 wird eine hydraulische Transferpresse vorgeschlagen, bei der die Synchronisation zwischen Presse und Transfer durch eine virtuelle Leitwelle erfolgt. Dabei werden die Bewegungsabläufe von Presse und Transfer jeweils als Funktion der Leitwelle tabellarisch abgelegt, aus denen im Lageregeltakt entsprechend der aktuellen Leitwellenposition die entsprechenden Positionssollwerte generiert und den Regelachsen als Sollwerte vorgegeben werden. Hier wird das Prinzip der leitwellengesteuerten Kurvenscheibenregelung vorteilhaft auf hydraulische Pressen angewendet, wobei eine Kombinationsmöglichkeit mit einer Kraftregelung oder Kraftbegrenzung nicht vorgesehen ist.

In der DE 198 06 751 A1 wird eine Pressenanlage mit elektrischem Antrieb nach dem Linearmotoren-Prinzip beschrieben. Die Regelung der Antriebe erfolgt durch eine mehrstufige Lageregelung, Geschwindigkeitsregelung, sowie Strom-(Kraft-) Beschleunigungsregelung. Da die Vorgabe des Bewegungsablaufes der im Parallel- oder im Master-Slave-Betrieb gesteuerten Linearmotoren als Stößelweg-Zeit-Charakteristik erfolgt, können Störgrößen im Bewegungsablauf das Risiko einer Asynchronität einerseits mit peripheren Einrichtungen und andererseits mit benachbarten Stößeln einer Mehrpressen-Anlage erhöhen.

In der JP 2004058152 A wird eine Methode zum Einstellen und Anzeigen der Stößelposition einer Servopresse und zum Synchronisieren mit peripheren Einrichtungen beschrieben. Hier wird bei der Dateneingabe für den Bewegungsablauf ein virtueller Kurbelwinkel berechnet und angezeigt. Während des Betriebes wird die Stößelposition im Zyklus zwischen dem oberen und unteren Umkehrpunkt erfasst und als zugeordneter virtueller Kurbelwinkel an die peripheren Einrichtungen ausgegeben. Da bei dieser Methode die Leitwellenposition rückwirkend aus der erfassten Stößelposition ermittelt wird, können zwar periphere Einrichtungen mit der Stößelbewegung, nicht aber mehrere Antriebe eines Stößels untereinander, wie beispielsweise Mehrpunktpressen synchronisiert werden.

In der JP 2003230996 A wird eine Steuerungsmethode für Mehrpunkt-Servopressen beschrieben, die durch ein Master-Slave-Regelungskonzept die Stößelkippung minimiert. Diese Methode hat den Nachteil, dass Positionsabweichungen beispielsweise infolge Federung der mechanischen Übertragungsglieder zwischen den Motoren und den Stößeldruckpunkten nicht ausgeregelt werden können.

In der JP 2003340600 A wird eine Stößelsteuerung für eine Servopresse mit Exzenterwelle und Kniehebel beschrieben, die einen variablen Stößelhub durch Reversierbetrieb des Servoantriebes zwischen zwei Winkelpositionen der Exzenterwelle ermöglicht. Diese Winkelpositionen entsprechen dem oberen und unteren Umkehrpunkt des Stößels und werden durch die Stößelsteuerung anhand der Eingabewerte für den oberen und unteren Umkehrpunkt berechnet. Die Art der Vorgabe, Berechnung, Regelung und insbesondere die Synchronisation der Bewegungs- und Kraftverläufe der Stößelbewegung sind dieser Druckschrift nicht zu entnehmen.

Aus der DE 19952941 A1 ist ein Steuerungsverfahren für Servopressen mit mehreren, jeweils einem Druckpunkt ausgestatteten Stößeln bekannt, das eine Kombination von Lageregelung und Momentenbegrenzung verwendet, um eine definierte Lastverteilung zwischen den Pressenstößeln untereinander zu erreichen und eine gegenseitige Beeinflussung zu verringern. Da dieses Verfahren nur auf Pressen mit mehreren Stößeln zielt, ist der Druckschrift keine Lösung zur Regelung der Bewegung eines Stößels mit mehreren Druckpunkten zu entnehmen. Da der Bewegungsablauf zeitabhängig gesteuert wird, können Störgrößen im Bewegungsablauf das Risiko einer Asynchronität einerseits mit peripheren Einrichtungen und andererseits mit benachbarten Stößeln einer Mehrpressen-Anlage erhöhen.

Nach der DE 19753949 A1 ist eine flexible Umformpresse mit Parallelkinematikantrieb für nichtlineare Stößelbewegung mit vorzugsweise sechs zwischen Stößel und Gestell angeordneten Aktoren in Form von Hydraulikzylindern oder Spindeln bekannt, an denen Längenmesseinrichtungen integriert sind, die die Messsignale der bei Belastung steifigkeitsbedingt verursachten Längenänderungen an die Pressensteuerung zur nachfolgenden steuerungstechnischen Kompensation rückführen. Die Anwendung dieser auf einen istwerterfassenden Lageregelkreis beschränkten Steuerung führt bei hochdynamischen Abläufen zu einer verminderten Regelgüte. Darüber hinaus ist eine Verknüpfung der Steuerung des Stößels einerseits mit peripheren Einrichtungen, wie beispielsweise Ziehkissen und Teiletransporteinrichtungen und andererseits mit benachbarten Stößeln einer Mehrpressen-Anlage nicht beschrieben.

Die EP 1 321 285 A2 beschreibt eine Umformmaschine mit einem von einem Servomotor antreibbaren Kurbelantrieb, wobei die Steuerung der Stößelbewegung in einem ersten Fall mit kraftgebundener Betriebsart durch eine kombinierte Lage- und Kraftregelung so erfolgt, dass bei Erreichen der Umformbereiches die Steuerung der Stößelbewegung positionsabhängig von Lage- auf Kraftregelung umschaltbar ist und nach Erreichen einer Soll-Kraft ohne Durchfahren des unteren Umkehrpunktes die Reversierung der Stößelbewegung mittels Lageregelung in die Ausgangsposition erfolgt. Durch dieses positionsabhängige Schaltsignal können prozessabhängige Schwankungen die Reproduzierbarkeit der kraftgeregelten Phase beeinträchtigen.

In einem zweiten Fall mit weggebundener Betriebsart ist die Steuerung der Stößelbewegung mit einer Presskraft-Verstelleinrichtung so kombiniert, dass beim Durchfahren des unteren Umkehrpunktes nach einem Soll-Istwert-Vergleich eine Korrektur der Stößellage zur Einhaltung einer definierten Presskraft erfolgen kann.

Die US 6 246 201 B1 beschreibt ein Steuerungssystem mit elektronischer Kurvenscheibenfunktion für Servomotoren, bei dem die Regelung der Antriebe durch eine mehrstufige Lage-, Geschwindigkeits- und Stromregelung erfolgt. Dabei werden aus den kurvengesteuerten Wegprofilvorgaben einerseits die Sollwerte für den Lageregler und andererseits durch eine erste Ableitung der Wegfunktion eine Geschwindigkeitsvorsteuerung für den Drehzahlregler erzeugt. Durch eine zweite Ableitung der Wegfunktion erfolgt eine Beschleunigungsvorsteuerung. Spezifische Steuerungsmerkmale zum Regeln der Stößelbewegung einer servo-elektrischen Presse sind nicht offenbart.

Aufgabe und Vorteil der Erfindung

Der Erfindung liegt die Aufgabe zugrunde, ein Verfahren und eine Vorrichtung zur Steuerung und Regelung der Stößelbewegung an servo-elektrischen Pressen zu schaffen, bei dem mittels einer einfachen Struktur der Steuerung und Regelung sowie einer geringen Anzahl von Verfahrensschritten ein präziser und reproduzierbarer Ablauf der Stößelbewegung sowohl in Phasen der lagegeregelten als auch kraftgeregelten Bewegung des Stößels ermöglicht und ein geregelter Betrieb sowohl zwischen mehreren Stößeldruckpunkten eines Stößels, als auch mehrerer Stößel einer Pressenanlage jeweils untereinander und zu peripheren Einrichtungen für eine hohe Ausstoßleistung gewährleistet wird. Darüber hinaus soll die Regelgüte der bei außermittiger Kraft nutzbaren Kippungsregelung eines mit mehreren Druckpunkten ausgestatteten Stößels bei hochdynamischen Abläufen verbessert werden.

Erfindungsgemäß wird die Aufgabe durch ein Verfahren zur Steuerung und Regelung der Stößelbewegung an servo-elektrischen Pressen mit den Merkmalen des Anspruches 1 gelöst. Weitere detaillierte Ausgestaltungen des Verfahrens sind in den Ansprüchen 2 bis 17 beschrieben. Die Durchführung des Verfahrens nach dem Anspruch 1 erfolgt mit einer Vorrichtung mit den Merkmalen gemäß Anspruch 18. Die Ansprüche 19 bis 26 enthalten weitere Ausgestaltungen der Vorrichtung.

Das Verfahren und die Vorrichtung sind sowohl bei Einpunktals auch bei Mehrpunkt-Pressen mit Kurbel-, Hebel-, Spindel- oder Linearantrieben mit jeweils Ober- oder Unterantrieb einsetzbar.

Der Kerngedanke besteht darin, dass zur Regelung der Stößelbewegung das Prinzip der leitwellengesteuerten elektronischen Kurvenscheibenregelung mit der Kraftregelung so kombinierbar ist, dass je nach Betriebsart die Bewegungsphasen des Stößels einerseits über elektronische Positions-Kurvenscheiben und andererseits über eine Kraftregelung oder Kraftbegrenzung steuerbar sind.

Ein Vorteil dieses Prinzips ist die Regelung der Bewegung des oder der Druckpunkte eines oder mehrerer Stößel untereinander und die einfache Möglichkeit der Synchronisation mit peripheren Einrichtungen wie beispielsweise Teiletransporteinrichtungen oder Ziehkissen. Die Synchronität wird auch bei Geschwindigkeitsänderungen und Not-Stopps der Stößelbewegung eingehalten, ohne dass hierfür spezielle Steuerfunktionen notwendig sind.

In Folge dieses präzisen und reproduzierbaren Ablaufes sind die Sicherheitsabstände zwischen der Bewegung der Stößel, Ziehkissen und Teiletransporteinrichtungen reduzierbar, wodurch eine hohe Ausstoßleistung ermöglicht wird.

Für eine hohe Ausstoßleistung sind darüber hinaus folgende weitere Vorteile der servo-elektrischen Pressen nutzbar. So sind beispielsweise Asynchronitäten im Bewegungsablauf vermeidbar, die zwischen einzelnen, jeweils konventionellen, mit Schwungrad, Kupplung und Bremse ausgestatteten Pressen einer Pressenanlage entstehen. Die Asynchronität ist hierbei eine Folge von eintretenden Geschwindigkeitsdifferenzen, die insbesondere durch die im Schaltbetrieb auftretenden Beschleunigungs- und Bremsvorgänge sowie durch den Drehzahlabfall während der Umformphase verursacht werden.

Bei Anwendung mehrerer Pressen besteht neben der Nutzung einer gemeinsamen Leitwelle für alle in einer Pressen-Anlage bewegbaren Stößel die Möglichkeit, die jeder Presse separat zugeordnete Leitwelle untereinander zu synchronisieren.

In einer ersten Betriebsart ist es möglich, den Bewegungsablauf des Stößels weggebunden entweder ohne Reversierbetrieb (beispielsweise bei Kurbelantrieb) durch den unteren Umkehrpunkt hindurch oder mit Reversierbetrieb (beispielsweise Kurbel-Spindel- Linearmotorantrieb) im unteren Umkehrpunkt mittels der elektronischen Positions-Kurvenscheiben lagegeregelt zu steuern.

In einer zweiten Betriebsart kann der Bewegungsablauf des Stößels mit kraftgebundener Reversierbewegung im unteren Umkehrpunkt durch eine kombinierte Lage- und Kraftregelung gesteuert werden, wobei neben reversierenden Kurbel- oder Spindelantrieben ebenso Linearmotore für die Stößelbewegung einsetzbar sind.

Wesentlich ist hierbei die Möglichkeit, die Umschaltung zwischen Lageregelung und Kraftregelung mit einfachen steuerungstechnischen Mitteln auszuführen. Die Umschaltung kann einerseits über einen Grenzwertschalter erfolgen, der beispielsweise beim Aufsetzen des Stößels auf das Unterwerkzeug eine Regelabweichung auswertet und eine Umschalteinrichtung auf Kraftregelung aktiviert. Andererseits kann der Wechsel von Lage- und Kraftregelung durch eine dynamische Kraftbegrenzung erfolgen.

In einer dritten Betriebsart kann der Bewegungsablauf des Stößels mit weg- oder kraftgebundener Reversierbewegung im unteren Umkehrpunkt durch eine Lageregelung so gesteuert werden, dass insbesondere während der Umformphase zusätzlich eine Kippungsregelung der einzelnen Druckpunkte einerseits zur Kompensation der bei außermittiger Belastung auftretenden unterschiedlichen Federung aller im Kraftfluss liegenden Antriebselemente und andererseits die Erzeugung einer Soll-Kippung des Stößels nutzbar ist. Hierbei ist wesentlich, dass in einem ersten Fall anhand eines in Vorbereitung der Verfahrensschritte gespeicherten Verlaufs der Federung ein kraftabhängiger Positions-Offset berechnet und die Lageregelung mit Positions-Kurvenscheibe und Positions-Offset erfolgt.

In einem zweiten Fall ist es möglich, mittels einer die Federung der einzelnen Druckpunkte messenden Sensorik die Lageregelung zu beeinflussen.

In einem dritten Fall können Positions-Offsets berechnet werden, die zur Vorsteuerung des im zweiten Fall beschriebenen Lageregelkreises mit Sensorik zur Erfassung der Ist-Lage verwendet werden, wodurch eine weitere Verbesserung der Regelgüte erzielbar ist.

Die Erfindung wird nachstehend an Ausführungsbeispielen näher erläutert. Die zugehörige Zeichnung zeigt:

Fig. 1 Prinzipieller Aufbau einer servo-elektrischen Presse
Fig. 2 Schrittfolge des Verfahrens zur Steuerung und Re- gelung der Stößelbewegung
Fig. 3 Typischer Verlauf von Bewegung und Antriebsmoment des Stößels in der Ausgestaltung mit linearem An- trieb
Fig. 4 Blockschaltbild für die Stößelpositionsregelung mit elektronischer Positions-Kurvenscheibe in ei- ner ersten Ausgestaltung mit linearem Antrieb
Fig. 5 Blockschaltbild für die Stößelpositionsregelung mit elektronischer Positions-Kurvenscheibe in ei- ner zweiten Ausgestaltung mit nichtlinearem An- trieb
Fig. 6 Grafische Darstellung einer Positions- Kurvenscheibe für die Kurbelwellenposition eines durch den unteren Umkehrpunkt schwingenden (nichtlinearen) Stößelantriebes

Ausführungsbeispiele

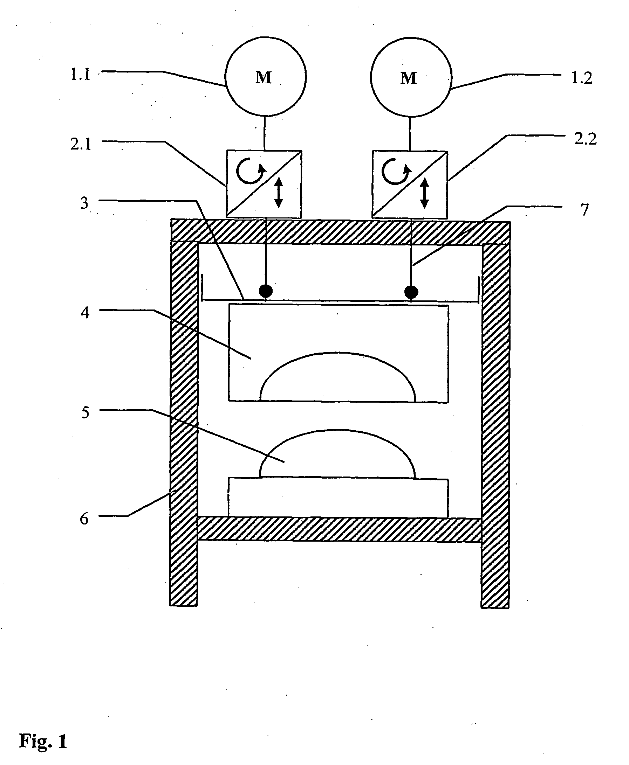

Fig. 1 zeigt den schematischen Aufbau einer servo-elektrischen Presse mit Servoantrieben für die Stößelbewegung. Im Gestell 6 ist einerseits das Unterwerkzeug 5 und andererseits der vertikal bewegliche Stößel 3 zur Aufnahme des Oberwerkzeuges 4 angeordnet. Der Antrieb des Stößels 3 erfolgt über zwei Druckpunkte 7 mit je einem Servomotor 1.1, 1.2 und Getriebe 2.1, 2.2 zur Umwandlung der Rotations- in eine Linearbewegung. Es ist ebenso möglich, vier Druckpunkte vorzusehen. Je nach konstruktivem Aufbau der Presse können die Servomotoren 1.1, 1.2 und Getriebe 2.1, 2.2 für den Stößelantrieb ein- oder mehrfach auf einen oder mehrere Druckpunkte 7 des Stößels 3 wirken. Es ist möglich, die Druckpunkte untereinander mechanisch oder elektrisch zu synchronisieren. Die schematisch dargestellten Getriebe 2.1, 2.2 können als Räder-, Spindel-, Exzenter-, Hebel- oder Kurbelgetriebe oder als Kombination dieser Varianten ausgeführt sein. Beim Einsatz von Linearmotoren ist auch eine Variante ohne Getriebe möglich.

Alternativ zu den als Oberantrieb auf den Stößel 3 wirkenden Getriebe 2.1, 2.2 ist eine Anwendung als Unterantrieb möglich, wobei die im wesentlichen zugbelasteten Getriebe zwischen Stößel 3 und dem unteren Teil des Gestells 6 anordenbar sind.

Durch die Servomotoren 1.1, 1.2 werden sowohl die Bewegungsabläufe als auch die Kraftverläufe des Stößels 3 für den Umformvorgang erzeugt. Das vorgeschlagene Verfahren zur Steuerung und Regelung der Stößelbewegung kann hierbei vorteilhaft in Kombination zu der für die jeweilige Funktion erforderlichen Kraftsteuerung des Stößels eingesetzt werden.

Die schematische Darstellung der einzelnen Presse nach Fig.1 ist ebenso repräsentativ für die Antriebe der Druckpunkte 7 jeweils mehrerer Stößel 3 einer Presse oder jeweils eines Stößels 3 von mehreren zu einer Pressen-Anlage gehörenden Pressen.

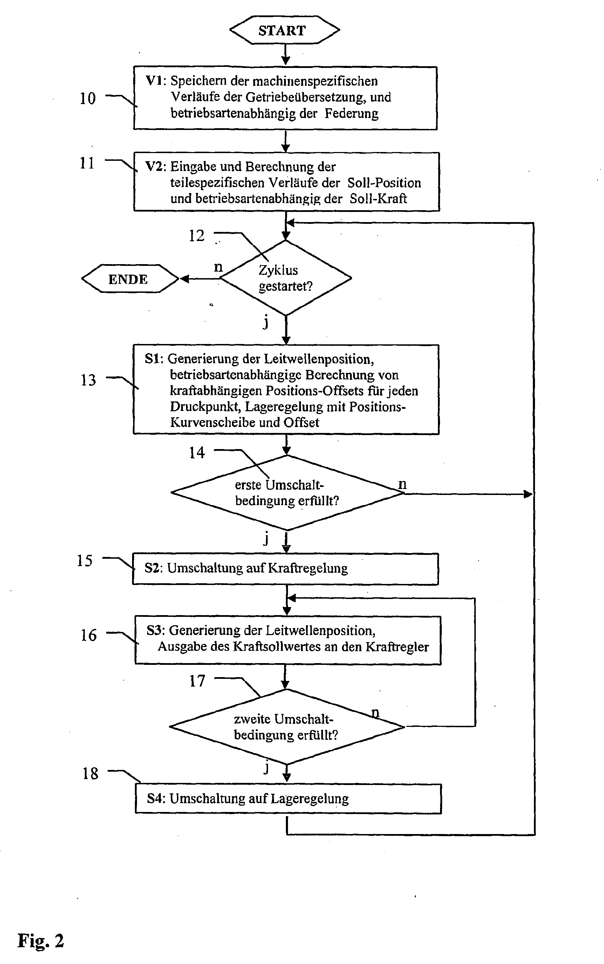

In Fig. 2 ist das vorgeschlagene Verfahren in Form einer Schrittfolge für eine vorteilhafte Ausgestaltung dargestellt. In der ersten Vorbereitungsphase 10 werden einmalig die maschinenspezifischen Verläufe steuerungsrelevanter Parameter, wie beispielsweise die Getriebeübersetzung und die elastische Federung der Antriebselemente ermittelt, in Form einer Tabelle, einer mathematischen Funktion oder einer Kombination aus beiden dargestellt und in der Steuerung gespeichert. Die variable Getriebeübersetzung i von Hebel-, Kurbel- oder Exzenterantrieben kann in Abhängigkeit von der Leitwellenposition $\varphi$ mit der Funktion

$$i = f(\varphi)$$

dargestellt werden.

Die elastische Federung ist insbesondere bei Pressen mit mehreren Druckpunkten des Stößels von Bedeutung und kann in Abhängigkeit von der übertragenen Kraft des betreffenden Druckpunktes oder des zugeordneten Motormomentes nach der Funktion

$$s_{korr} = f \ (F_{ist})$$

dargestellt werden.

In der zweiten Vorbereitungsphase 11 werden die erforderlichen teilespezifischen Verläufe der Soll-Position $S_{soll}$ und Soll-Kraft $F_{soll}$ in Abhängigkeit von der Leitwellenposition φ einmalig, beispielsweise manuell über eine entsprechende Bedienoberfläche in die Steuerung eingegeben.

Die Steuerung berechnet aus den Eingabewerten die eigentlichen Verläufe nach der Funktion

$$s_{soll} = f \ (\varphi), \ M_{soll} = f \ (\varphi) \ oder \ M_{soll} = konstant$$

in Form von Tabellen, mathematischen Funktionen oder je einer Kombination aus beiden.

Bei Exzenter- und Kurbelantrieben kann unter Einbeziehung der Getriebeübersetzung i zweckmäßigerweise auch ein rotativ bewerteter Verlauf der Soll-Position $\beta_{soll}$ nach der Funktion

$$\beta_{soll} = f \ (\varphi)$$

berechnet und eingegeben werden.

Dieser leitwellenabhängige Verlauf der Soll- Position wird auch als Positions-Kurvenscheibe 20 bezeichnet. Die in den Vorbereitungsphasen 10, 11 ermittelten Verläufe werden in der Steuerung gespeichert und können bei Umrüstung auf ein anderes Teil aus dem Speicher abgerufen werden.

Es ist ebenso denkbar, die Vorbereitungsphasen 10, 11 für ein neues Teil schon auszuführen, während der Bewegungszyklus für das vorherige Teil noch ausgeführt wird.

Nach dem Startsignal 12 beginnt mit dem ersten Verfahrensschritt 13 der zyklische Ablauf, indem eine virtuelle Leitwelle 30 durch die Steuerung nach der Funktion

$$\varphi = f \ (t)$$

generiert wird.

Anhand der Leitwelle 30 wird ein Positions-Sollwert aus der Positions-Kurvenscheibe 20 nach der Funktion

$$s_{soll} = f \ (\varphi) \ oder \ \beta_{soll} = f \ (\varphi)$$

ausgelesen.

Mit der zyklischen Wiederholung des ersten Verfahrensschrittes 13 ist es in einer ersten Betriebsart möglich, den Bewegungsablauf des Stößels 3, beispielsweise bei Kurbelpressen, weggebunden durch den unteren Umkehrpunkt mittels der Positions-Kurvenscheibe 20 lagegeregelt zu steuern.

In einer zweiten Betriebsart kann der Bewegungsablauf des Stößels 3 mit kraftgebundener Reversierbewegung im unteren Umkehrpunkt durch eine kombinierte Lage- und Kraftregelung wie folgt gesteuert werden.

Entsprechend dem ersten Verfahrensschritt 13 wird durch den Verlauf der Positions-Kurvenscheibe 20 die Stößelbewegung abwärts mit dem gewünschten Bewegungsprofil bis zum Aufsetzen auf das Unterwerkzeug 5 ausgeführt.

Im zweiten Verfahrensschritt 15 wird beim Aufsetzen des Stößels 3 mit dem Oberwerkzeug 4 auf das Unterwerkzeug 5 mit einer ersten Umschaltbedingung 14 auf Kraft- oder Drehmomentenregelung umgeschaltet. Die erste Umschaltbedingung 14 kann durch das Erreichen einer bestimmten Stößelposition, einer definierten Regelabweichung oder durch den Verlauf der Positions-Kurvenscheibe 20 in Verbindung mit einer Kraft- oder Momentenbegrenzung erfüllt werden.

Im dritten Verfahrensschritt 16 wird weiterhin die virtuelle Leitwelle 30 durch die Steuerung generiert. Sie dient in dieser Phase als Anzeige und als Mittel zur Synchronisation mit peripheren Einrichtungen und wirkt sich nicht direkt auf den Bewegungsablauf des Stößels aus, da die Kraft- oder Drehmomentenregelung ausgeführt wird. Im Bedarfsfall kann über die Leitwelle 30 ebenso ein variabler Sollwert für die Kraft- oder Momentenregelung generiert werden.

Im vierten Verfahrensschritt 18 erfolgt zu Beginn des Stößelhochlaufes nach einer zweiten Umschaltbedingung 17 wieder ein Umschalten auf Lageregelung mit Positions-Kurvenscheibe 20. Die zweite Umschaltbedingung 17 kann entweder durch das Erreichen einer bestimmten Leitwellenposition, einer definierten Regelabweichung oder durch den Verlauf der Positions-Kurvenscheibe 20 in Verbindung mit einer Kraft- oder Momentenbegrenzung erfüllt werden.

Solange der zyklische Ablauf gestartet ist, wird der Bewegungsablauf mit dem ersten Verfahrensschritt 13 fortgesetzt. Durch den Verlauf der Positions-Kurvenscheibe 20 wird der Stößelhochlauf beispielsweise mit Rast in der oberen Lage beendet, an den sich der nächste Bewegungszyklus anschließt.

In einer dritten Betriebsart kann der Bewegungsablauf des Stößels mit Reversierbewegung im unteren Umkehrpunkt durch eine Lageregelung gesteuert werden.

Bei Pressen mit mehreren Druckpunkten kann hierbei eine Kippungsregelung vorteilhaft genutzt werden, wobei im ersten Verfahrensschritt 13 zusätzlich für jeden Druckpunkt ein Korrekturwert $S_{korr}$ als kraftabhängiger Positions-Offset nach der Funktion

$$s_{korr} = f\ (M_{ist})\ oder\ \beta_{korr} = f\ (s_{korr},\ i)$$

ermittelt wird.

Die Summe des Sollwertes aus der Positions-Kurvenscheibe 20 und des Korrekturwertes wird als Sollwert für den Lageregler des jeweiligen Servoantriebes ausgegeben und die Position des zugehörigen Druckpunktes ausgeregelt. In dieser Betriebsart schließt sich der Verfahrensschritt 16 an, wobei neben der weiteren Generierung der Leitwelle 30 bedarfsweise ein Kraft- oder Momentengrenzwert 35 ausgegeben wird.

Die Bewegungsumkehr des Stößels kann einerseits bei weggebundener Reversierbewegung im unteren Umkehrpunkt durch eine Lageregelung gesteuert werden oder andererseits bei kraftgebundener Reversierbewegung durch eine Momenten- oder Kraftbegrenzung aktiviert werden. Nach Beendigung des Stößelhochlaufs wird der Zyklus mit dem ersten Verfahrensschritt 13 fortgesetzt.

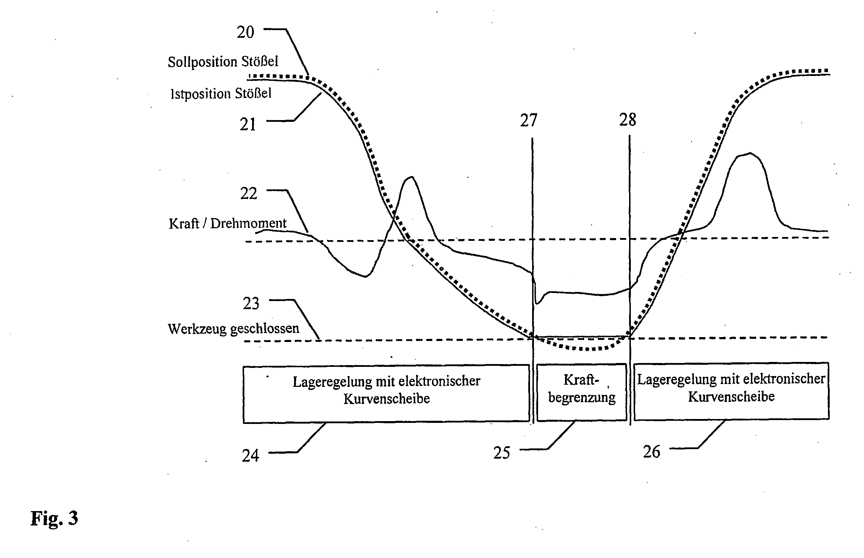

Die in Fig.2 dargestellte Folge der Verfahrensschritte der Stößelbewegung ist für die zweite der vorstehend beschriebenen Betriebsarten mit kombinierter Lage- und Kraftregelung eines im unteren Umkehrpunkt reversierenden Antriebes, beispielsweise eines Spindelantriebes, aus Fig. 3 grafisch ersichtlich.

Die Stößelposition 21, die Positions-Kurvenscheibe 20 und die Kraft oder das Drehmomentes ist als zeit- oder kurbelwinkelabhängiger Verlauf dargestellt.

In der ersten Phase 24 erfolgt die Lageregelung mit elektronischer Positions-Kurvenscheibe 20, wobei die Stößelposition 21 der Positions-Kurvenscheibe 20 folgt und dabei die Rast im oberen Umkehrpunkt sowie die Abwärtsbewegung des Stößels einschließlich der Geschwindigkeitsreduzierung zu Umformbeginn steuert. Diese Phase entspricht dem ersten Verfahrensschritt 13 nach Fig. 2.

Im Auftreffpunkt 27 erfolgt die Umschaltung auf Kraftregelung entsprechend dem zweiten Verfahrensschritt 15 aus Fig. 2. In der sich anschließenden zweiten Phase 25 erfolgt die Kraftregelung mit definiertem Kraftsollwert entsprechend dem dritten Verfahrensschritt 16 aus Fig. 2. In dieser Phase ist die Positions-Kurvenscheibe 20 unwirksam.

Zum Beginn des Stößelhochlaufes 28 erfolgt in Analogie zum vierten Verfahrensschritt 18 nach Fig. 2 das Umschalten auf Lageregelung mit elektronischer Positions-Kurvenscheibe 20. Die sich anschließende dritte Phase 26 beinhaltet den Stößelhochlauf mit Rast in der oberen Lage. Der Ablauf wiederholt sich zyklisch mit der eingangs beschriebenen ersten Phase 24. Die genannten Bewegungsfunktionen sind im Verlauf der Positions-Kurvenscheibe 20 enthalten und werden durch die Lageregelung in Abhängigkeit von der in der Steuerung generierten virtuellen Leitwelle (30) ausgeführt.

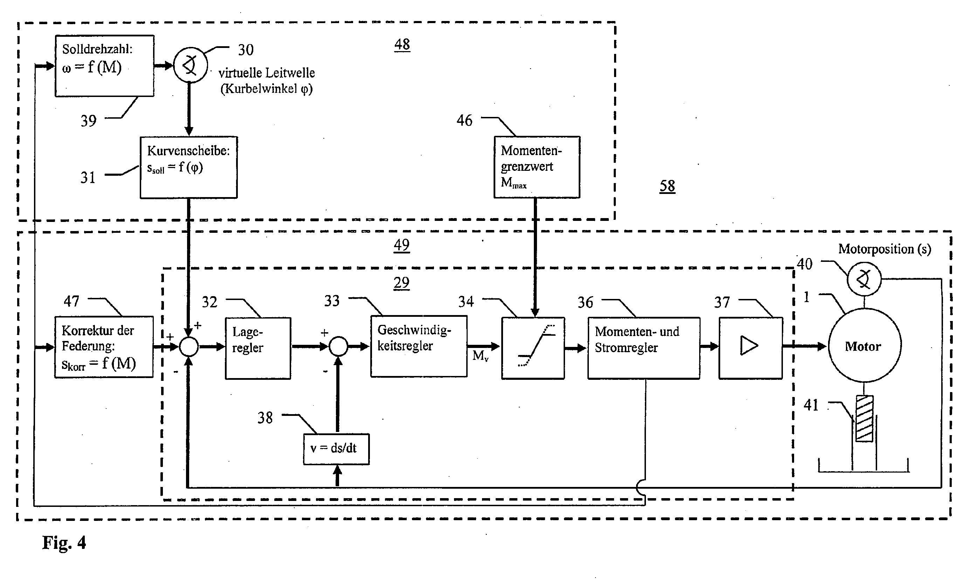

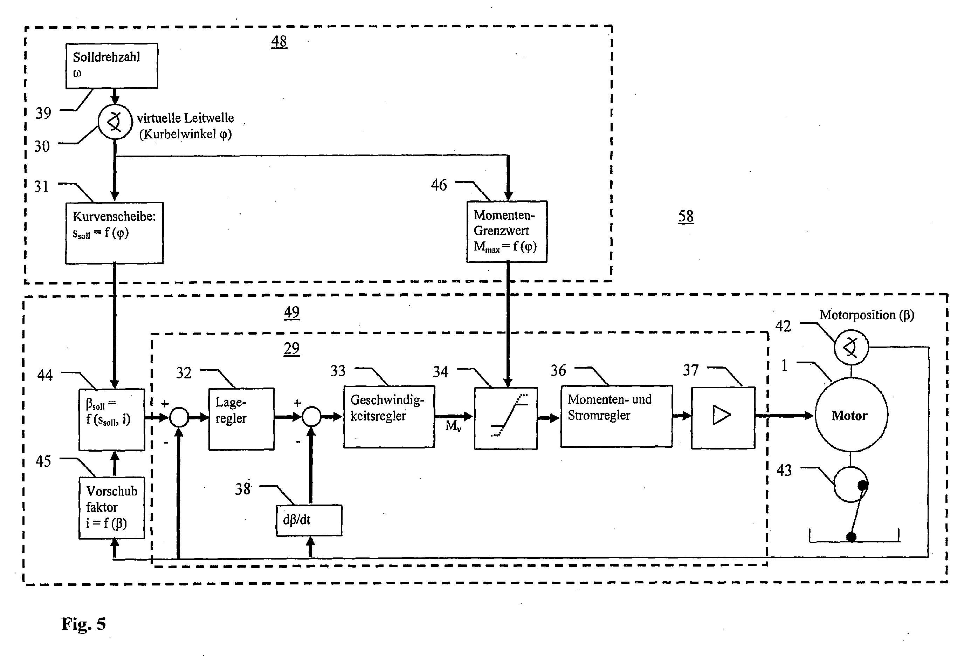

Die Figuren 4 und 5 zeigen vorteilhafte Ausgestaltungen der Stößelsteuerung mit elektronischer Kurvenscheibe und partieller Umschaltung auf Kraftregelung in Form von Blockschaltbildern. Beide Blockschaltbilder bestehen jeweils aus einem nur einmal vorhandenen zentralen Teil der NC-Steuereinrichtung 48 und einem druckpunkt-zugeordneten Teil der NC-Steuereinrichtung 49, der für jeden Druckpunkt 7 einmal vorhanden sein kann.

Nach Fig. 4 wird ein linear wirkender Stößelantrieb, beispielsweise ein Spindelgetriebe 41 durch einen Servomotor 1 angetrieben. Die Motorposition wird über einen Positionsgeber 40 erfasst, der gleichzeitig auch zur Erfassung der Stößelposition dient. Diese kann alternativ auch durch einen direkt am Stößel angeordneten Positionsgeber erfasst werden. Bei einem Stößel mit mehreren Druckpunkten können die genannten Antriebselemente und Positionsgeber 40 mehrfach vorhanden sein.

Der druckpunkt-zugeordnete Teil der NC-Steuereinrichtung 49 besteht aus den drei Regelkreisen Lageregler 32, Geschwindigkeitsregler 33 und Momenten-/ Stromregler 36 sowie der Funktionseinheit zur Momentenbegrenzung 34 und dem Leistungsverstärker 37. Alle drei Regelkreise werden durch Rückführung der entsprechenden Istwerte geschlossen. Der Lage-Istwert wird vom Positionsgeber 40 geliefert. Der Geschwindigkeits-Istwert wird durch ein Differenzierglied 38 aus dem Lage-Istwert erzeugt und der Momenten-Istwert wird intern über den Motorstrom erfasst.

Der zentrale Teil der NC-Steuereinrichtung 48 beinhaltet eine Funktionseinheit zur Generierung einer virtuellen Leitwelle 30, die von einer Funktionseinheit zur Vorgabe der Leitwellendrehzahl 39 beeinflusst wird. Die virtuelle Leitwelle 30 wirkt auf eine Kurvenscheiben-Steuereinrichtung 31 zum Berechnen, Speichern und leitwellenabhängigen Auslesen von Positions-Kurvenscheiben. Weiterhin beinhaltet der zentrale Teil der NC-Steuereinrichtung 48 eine Funktionseinheit zur Vorgabe von Kraft- oder Momentengrenzwerten 35. Der Funktionsablauf wird durch die virtuelle Leitwelle 30, die hier den Kurbelwinkel einer mechanischen Presse simuliert, folgendermaßen gesteuert:

Wenn sich der Stößel von seinem oberen Umkehrpunkt bis zum Auftreffpunkt 27 auf das Unterwerkzeug bewegt, werden durch die Kurvenscheibensteuerfunktion 31 fortlaufend Lage-Sollwerte an den Lageregler 32 übergeben. Dem Lageregler 32 ist der Geschwindigkeitsregler 33 nachgeordnet, der wiederum über die Momentenbegrenzung 34 den Momenten- und Stromregler 36 ansteuert. In dieser Bewegungsphase arbeiten die drei kaskadierten Regler als Lageregelung, so dass der über einen Leistungsverstärker 37 angesteuerte Servomotor 1 und der wirkverbundene Stößel der Positions-Kurvenscheibe 57 folgt. Auf diese Weise wird die erste Bewegungsphase des Stößels, bestehend aus Rast in der oberen Lage und Abwärtsbewegung gesteuert.

Beim Aufsetzen des Stößels auf das Unterwerkzeug wird die Funktionseinheit zur Momentenbegrenzung 34 wirksam. Damit sind Lage- und Geschwindigkeitsregler 32, 33 wirkungslos und der Momenten-/Stromregler 36 erhält seinen Sollwert von der Funktionseinheit zur Vorgabe von Kraft- oder Momentengrenzwerten 35. Auf diese Weise wird die zweite Phase 25 des Stößels ab Auftreffpunkt 27 bis zum Beginn des Stößelhochlaufes 28 gesteuert.

Anschließend wird wieder auf Lageregelung mit Positions-Kurvenscheibe 20 umgeschaltet, sobald der vom Lage- und Geschwindigkeitsregler 32,33 erzeugte Momentensollwert den Momentengrenzwert unterschreitet.

Die Lageregelung bleibt bis zum nächsten Aufsetzen des Stößels auf das Werkzeug aktiv, so dass sich der Bewegungszyklus wie oben beschrieben fortsetzt.

In einer vorteilhaften Ausgestaltung ist eine Funktionseinheit zur Vorgabe der Leitwellendrehzahl 39 vorgesehen, die die Solldrehzahl in Abhängigkeit vom Motormoment beeinflusst. Damit kann eine optimale Hubzahl der Presse erreicht und gleichzeitig eine Überlastung des Stößelantriebes verhindert werden. Zweckmäßigerweise wird dazu der Maximalwert des Motormomentes während der Phasen 24 und 26 erfasst und davon abhängig beim nächsten Zyklus eine korrigierte Drehzahl vorgegeben. Anstelle des Motormomentes kann zur Beeinflussung der Leitwellendrehzahl auch die Regelabweichung des Lage- oder Drehzahlreglers verwendet werden.

In einer weiteren vorteilhaften Ausgestaltung wird eine Funktionseinheit zur Korrektur der Federung 47 genutzt, die in Abhängigkeit vom Motormoment die Federung der Antriebselemente durch einen Offset auf die Sollposition kompensiert. Hierdurch kann beispielsweise bei Pressen mit mehreren Druckpunkten die Stößelkippung infolge außermittiger Belastung reduziert werden. Diese Funktion ist bei Pressen mit einerseits linear wirkenden Stößelantrieben, beispielsweise Spindeln oder Linearmotoren und andererseits rotatorischen Antrieben, beispielsweise Exzenterantrieben mit Reversierbewegung im unteren Umkehrpunkt anwendbar.

Im Ausführungsbeispiel nach Fig. 5 steuert der Servomotor 1 einen rotatorisch angetriebenen Stößel mit Kurbelgetriebe 43. Die über den Positionsgeber 42 erfasste Motorposition ist wegen des variablen Vorschubfaktors des Kurbelgetriebes nicht proportional zur Stößelposition und wird zweckmäßigerweise rotatorisch bewertet. Der druckpunkt-zugeordnete Teil 49 der NC-Steuereinrichtung 58 besteht analog Fig. 4 aus Lageregler 32, Geschwindigkeitsregler 33, Differenzierglied 38, Momenten-/Stromregler 36 sowie der Funktionseinheit zur Momentenbegrenzung 34 und dem Leistungsverstärker 37. Gegenüber dem Ausführungsbeispiel nach Fig.4 ist eine Funktionseinheit zur Korrektur der Federung nicht vorgesehen. Zusätzlich ist eine Funktionseinheit 44 vorhanden, die die linear vorgegebene Stößelposition in eine rotatorische Motorposition umrechnet. Dazu wird der von der Funktionseinheit 45 anhand der aktuellen Motorposition ermittelte Vorschubfaktor verwendet.

Der zentrale Teil 48 der NC-Steuereinrichtung 58 entspricht prinzipiell der Ausführung nach Fig. 4. In diesem Beispiel wird jedoch eine konstante Solldrehzahl verwendet, die beispielsweise teilespezifisch vorgebbar ist und nicht lastabhängig korrigiert wird. Der Momentengrenzwert kann hier durch die Funktionseinheit 46 abhängig von der Leitwellenposition variiert werden, um beispielsweise trotz der variablen Übersetzung durch das Kurbelgetriebe einen konstanten Grenzwert für die Stößelkraft zu erreichen. Diese Ausführung ist vorteilhaft ohne Einschränkungen bei Kurbelgetrieben in der Betriebsart mit Reversierbewegung vor dem tiefsten unteren Umkehrpunkt nutzbar.

In einer vorteilhaften Ausgestaltung kann das Ausführungsbeispiel nach Fig. 5 so modifiziert werden, dass die Kurvenscheiben-Steuereinrichtung 31 anstelle der Sollwerte für die Stößelposition die Sollwerte für die Motorposition vorgibt. Durch den Wegfall der Funktionseinheiten 44 und 45 kann die Steuerfunktion vereinfacht werden. Dafür ist die entsprechende Umrechnung der Stößelposition in die Motorposition bereits bei der Eingabe der Positions-Kurvenscheibe zu berücksichtigen.

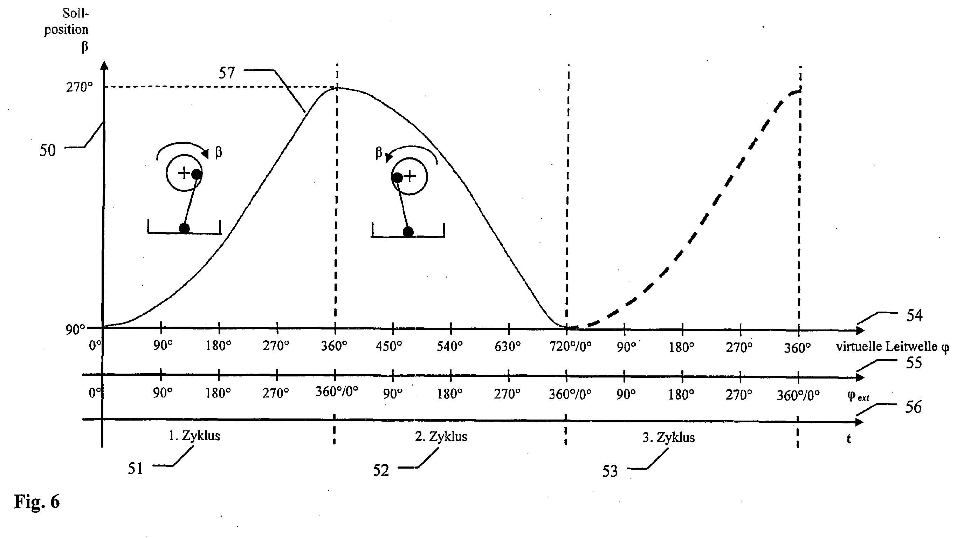

Für rotatorische Antriebe, die nicht umlaufen, sondern nur um den unteren Umkehrpunkt pendeln, zeigt Fig. 6 eine Möglichkeit zur Gestaltung der Positions-Kurvenscheibe. Bei diesem Prinzip muss der Antrieb bei jedem Pressenhub seine Drehrichtung umkehren. Damit die virtuelle Leitwelle kontinuierlich weiter in die gleiche Richtung laufen kann, wird eine Kurvenscheibe 57 verwendet, die einen ersten und zweiten Zyklus 51, 52 beinhaltet. Im ersten Zyklus 51 wird der Bewegungsablauf des Stößels durch eine Rechtsdrehung des Antriebes erzeugt und im zweiten Zyklus 52 wird der gleiche Bewegungsablauf durch eine Linksdrehung erzeugt. Der sich anschließende dritte Zyklus 53 ist identisch mit dem ersten Zyklus 51. Die virtuelle Leitwelle läuft hier für die Leitwellenposition intern 54 bis 720 Grad und wird zur Leitwellenposition extern 55 so umgerechnet, dass sie jeden Bewegungszyklus mit 360 Grad anzeigt.

Bezugszeichenliste

| | |
|---|---|
| 1.1, 1.2 | Servomotor |
| 2.1, 2.2 | Getriebe |
| 3 | Stößel |
| 4 | Oberwerkzeug |
| 5 | Unterwerkzeug |
| 6 | Gestell |
| 7 | Druckpunkt |

| | |
|---|---|
| 10 | erste Vorbereitungsphase |
| 11 | zweite Vorbereitungsphase |
| 12 | Startsignal |
| 13 | erster Verfahrensschritt |
| 14 | erste Umschaltbedingung |
| 15 | zweiter Verfahrensschritt |
| 16 | dritter Verfahrensschritt |
| 17 | zweite Umschaltbedingung |
| 18 | vierter Verfahrensschritt |

| | |
|---|---|
| 20 | Positions-Kurvenscheibe |
| 21 | Stößelposition |
| 22 | Antriebskraft / Antriebsmoment |
| 23 | Position für Werkzeug geschlossen |
| 24 | erste Phase |
| 25 | zweite Phase |
| 26 | dritte Phase |
| 27 | Auftreffpunkt des Stößels auf das Werkzeug |
| 28 | Beginn des Stößelhochlaufes |
| 29 | Achsregeleinrichtung |

| | |
|---|---|
| 30 | virtuelle Leitwelle |
| 31 | Kurvenscheiben-Steuereinrichtung |
| 32 | Lageregler |
| 33 | Geschwindigkeitsregler |
| 34 | Funktionseinheit zur Momentenbegrenzung |
| 35 | Kraft- oder Momentengrenzwert |
| 36 | Momenten-/Stromregler |
| 37 | Leistungsverstärker |
| 38 | Differenzierglied |
| 39 | Funktionseinheit zur Vorgabe der Leitwellendreh- zahl |

| | |
|---|---|
| 40 | Positionsgeber am Motor zum Stößelantrieb (linear bewertet) |
| 41 | Stößel mit Spindelgetriebe |

42 Positionsgeber am Motor zum Stößelantrieb (rota- torisch bewertet)

43 Stößel mit Kurbelgetriebe

44 Funktionseinheit zur Berechnung der rotatorischen Motorposition

45 Funktionseinheit zur Ermittlung des Vorschubfak- tors

46 Funktionseinheit zur Vorgabe des Momen- tengrenzwertes

47 Funktionseinheit zur Korrektur der Federung

48 zentraler Teil der NC-Steuereinrichtung

49 druckpunkt-zugeordneter Teil der NC- Steuereinrichtung

50 Sollposition (Diagrammachse)

51 erster Zyklus

52 zweiter Zyklus

53 dritter Zyklus

54 Leitwellenposition intern (Diagrammachse)

55 Leitwellenposition extern (Diagrammachse)

56 Zeit (Diagrammachse)

57 Verlauf der Positions-Kurvenscheibe

58 NC-Steuereinrichtung

## Patentansprüche

1. Verfahren zur Steuerung und Regelung der Stößelbewegung an servo-elektrischen Pressen, bei denen die Positionen, Geschwindigkeiten und Kräfte oder Drehmomente der Servomotoren (1.1, 1.2) mittels einer NC-Steuereinrichtung (58) steuerbar sind, **dadurch gekenntzeichnet,** dass die Soll-Drehmomente für den oder die Servomotoren (1.1, 1.2) zum Antrieb des oder der Druckpunkte (7) eines oder mehrerer Stößel (3) in Abhängigkeit von Einflussgrößen, wie die leitwellenpositionsabhängige Getriebeüübersetzung i = f (φ) und/oder die kraftabhängige Federung $S_{korr}$ = f ($F_{ist}$, $M_{ist}$), mittels durch eine virtuelle Leitwelle (30) gesteuerter Positions-Kurvenscheibe (20) regelbar sind, wobei im Fall mit lagegebundener Reversierbewegung im Bereich des unteren Umkehrpunktes die Positions-Kurvenscheibe (20) mit Korrekturwerten in Form eines kraftabhängigen Positions-Offset beaufschlagbar ist und wobei im Fall mit kraftgebundener Reversierbewegung im Bereich des unteren Umkehrpunktes die Umschaltung zwischen Lage- und Kraftregelung entweder durch Auswertung einer maximalen Regelabweichung des Lage-(32) oder Geschwindigkeitsreglers (33) oder durch den Verlauf der Positions-Kurvenscheibe (20) unterhalb der vom Werkzeug erzwungenen Stößelposition (21) in Verbindung mit einem Kraft- oder Momentengrenzwert (35) erfolgt.

2. Verfahren zur Steuerung und Regelung der Stößelbewegung an servo-elektrischen Pressen nach Anspruch 1, **dadurch gekennzeichnet,** dass vor Beginn des Verfahrensablaufes in der ersten Vorbereitungsphase (10) der maschinenspezifische Verlauf der Getriebeüübersetzung in der NC-Steuereinrichtung (58) gespeichert wird, dass in der zweiten Vorbereitungsphase (11) der teilespezifische Soll-Verlauf für die Position der Druckpunkte (7) eingegeben, berechnet und als Positions-Kurvenscheibe (20) in der NC-Steuereinrichtung (58) gespeichert wird und dass im Verfahrensschritt (13) während der Stößelbewegung eine virtuelle Leitwelle (30) generiert und die Stößelposition durch eine Lageregelung beeinflussbar ist, die ihren Sollwert aus einer entsprechend der virtuellen Leitwelle (30) ausgelesenen Positions-Kurvenscheibe (20) erhält,

3. Verfahren zur Steuerung und Regelung der Stößelbewegung an servo-elektrischen Pressen nach Anspruch 1, **dadurch gekennzeichnet,** dass vor Beginn des Verfahrensablaufes in der ersten Vorbereitungsphase (10) der maschinenspezifische Verlauf der Getriebeüübersetzung in der NC-Steuereinrichtung (58) gespeichert wird, dass in der zweiten Vorbereitungsphase (11) die teilespezifischen Soll-Verläufe für die Position und die Kraft in Abhängigkeit von der Position der Leitwelle (30) eingegeben, berechnet und als Positions-Kurvenscheibe (20) und Kraft- oder Momentengrenzwert (35) in der NC-Steuereinrichtung (58) gespeichert werden, dass im ersten Verfahrensschritt (13) während der Stößelbewegung eine virtuelle Leitwelle (30) generiert und die Stößelposition durch eine Lageregelung beeinflussbar ist, die ihren Sollwert aus einer entsprechend der virtuellen Leitwelle (30) ausgelesenen Positions-Kurvenscheibe (20) erhält, dass im zweiten Verfahrensschritt (15) bei Erfüllung der ersten Umschaltbedingung (14) auf Kraft- oder Drehmomentenregelung umgeschaltet wird, dass im dritten Verfahrensschritt (16) nach Erfüllung der ersten Umschaltbedingung (14) eine Kraft- oder Drehmomentenregelung erfolgt und zusätzlich weiterhin die virtuelle Leitwelle (30) generiert wird und

**dass** im vierten Verfahrensschritt (18) bei Erfüllung der zweiten Umschaltbedingung (17) zu Beginn des Stößelhochlaufes (28) wieder auf Lageregelung mit Positions-Kurvenscheibe (20) umgeschaltet und der Bewegungsablauf mit dem ersten Verfahrensschritt (13) zyklisch fortgesetzt wird.

4. Verfahren zur Steuerung und Regelung der Stößelbewegung an servo-elektrischen Pressen nach Anspruch 1, **dadurch gekennzeichnet,**
   **dass** vor Beginn des Verfahrensablaufes in der ersten Vorbereitungsphase (10) die maschinenspezifischen Verläufe der Getriebeübersetzung und der Federung der Antriebselemente in der NC-Steuereinrichtung (58) gespeichert werden, dass in der zweiten Vorbereitungsphase (11) die teilespezifischen Soll-Verläufe für die Position und betriebsartenabhängig die Kraft in Abhängigkeit von der Position der Leitwelle (30) eingegeben, berechnet und als Positions-Kurvenscheibe (20) und betriebsartenabhängig als Kraft- oder Momentengrenzwert (35) in der NC-Steuereinrichtung (58) gespeichert werden,
   **dass** im ersten Verfahrensschritt (13) während der Stößelbewegung eine virtuelle Leitwelle (30) generiert, ein kraftabhängiger Positions-Offset für jeden Druckpunkt (7) berechnet und die Stößelposition durch eine Lageregelung beeinflussbar ist, die ihren Sollwert aus einer entsprechend der virtuellen Leitwelle (30) ausgelesenen Positions-Kurvenscheibe (20) und dem jeweiligen Positions-Offset erhält,
   **dass** im Verfahrensschritt (16) betriebsartenabhängig die Ausgabe des Kraft- oder Momentengrenzwert (35) erfolgt und zusätzlich weiterhin die virtuelle Leitwelle (30) generiert wird und
   **dass** sich im Verfahrensschritt (18) bei betriebsartenabhängiger Erreichung des Kraft- oder Momentengrenzwertes (35) der Stößelhochlauf (28) mittels Lageregelung über Positions-Kurvenscheibe (20) anschließt und der Bewegungsablauf mit dem ersten Verfahrensschritt (13) zyklisch fortgesetzt wird.

5. Verfahren zur Steuerung und Regelung der Stößelbewegung an servo-elektrischen Pressen nach Anspruch 1, **dadurch gekennzeichnet, dass** vor Beginn des Verfahrensablaufes in der ersten Vorbereitungsphase (10) der maschinenspezifische Verlauf der Getriebeübersetzung in der NC-Steuereinrichtung (58) gespeichert wird,
   dass in der zweiten Vorbereitungsphase (11) die teilespezifischen Soll-Verläufe für die Position und betriebsartenabhängig die Kraft in Abhängigkeit von der Position der Leitwelle (30) eingegeben, berechnet und als Positions-Kurvenscheibe (20) und betriebsartenabhängig als Kraft- oder Momentengrenzwert (35) in der NC-Steuereinrichtung (58) gespeichert werden,
   dass im ersten Verfahrensschritt (13) während der Stößelbewegung eine virtuelle Leitwelle (30) generiert und die Stößelposition durch eine Lageregelung beeinflussbar ist, die ihren Sollwert aus einer entsprechend der virtuellen Leitwelle (30) ausgelesenen Positions-Kurvenscheibe (20) und den aus der Federung der einzelnen Druckpunkte (7) gemessenen Ist-Positionen erhält,
   dass im Verfahrensschritt (16) betriebsartenabhängig die Ausgabe des Kraft- oder Momentengrenzwert (35) erfolgt und zusätzlich weiterhin die virtuelle Leitwelle (30) generiert wird und
   dass sich im Verfahrensschritt (18) bei betriebsartenabhängig Erreichung des Kraft- oder Momentengrenzwertes (35) der Stößelhochlauf (28) mittels Lageregelung über Positions-Kurvenscheibe (20) anschließt und der Bewegungsablauf mit dem ersten Verfahrensschritt (13) zyklisch fortgesetzt wird.

6. Verfahren zur Steuerung und Regelung der Stößelbewegung an servo-elektrischen Pressen nach Anspruch 1, **dadurch gekennzeichnet,**
   **dass** vor Beginn des Verfahrensablaufes in der ersten Vorbereitungsphase (10) die maschinenspezifischen Verläufe der Getriebeübersetzung und der Federung der Antriebselemente in der NC-Steuereinrichtung (58) gespeichert werden,
   **dass** in der zweiten Vorbereitungsphase (11) die teilespezifischen Soll-Verläufe für die Position und betriebsartenabhängig die Kraft in Abhängigkeit von der Position der Leitwelle (30) eingegeben, berechnet und als Positions-Kurvenscheibe (20) und betriebsartenabhängig als Kraft- oder Momentengrenzwert (35) in der NC-Steuereinrichtung (58) gespeichert werden,
   **dass** im ersten Verfahrensschritt (13) während der Stößelbewegung eine virtuelle Leitwelle (30) generiert, ein kraftabhängiger Positions-Offset für jeden Druckpunkt (7) berechnet und die Stößelposition durch eine Lageregelung beeinflussbar ist, die ihren Sollwert aus einer entsprechend der virtuellen Leitwelle (30) ausgelesenen Positions-Kurvenscheibe (20), dem jeweiligen Positions-Offset und den aus der Federung der einzelnen Druckpunkte (7) gemessenen Ist-Positionen erhält,
   **dass** im Verfahrensschritt (16) betriebsartenabhängig die Ausgabe des Kraft- oder Momentengrenzwert (35) erfolgt und zusätzlich weiterhin die virtuelle Leitwelle (30) generiert wird und
   **dass** sich im Verfahrensschritt (18) bei betriebsartenabhängiger Erreichung des Kraft- oder Momentengrenzwertes (35) der Stößelhochlauf (28) mittels Lageregelung über Positions-Kurvenscheibe (20) anschließt und der Bewegungsablauf mit dem ersten Verfahrensschritt (13) zyklisch fortgesetzt wird.

7. Verfahren zur Steuerung und Regelung der Stößelbewegung an servo-elektrischen Pressen nach einem der vorstehenden Ansprüche, **dadurch gekennzeichnet,**
**dass** ein oder mehrere Druckpunkte (7) eines zu einer Presse gehörenden Stößels (3) steuerbar sind.

8. Verfahren zur Steuerung und Regelung der Stößelbewegung an servo-elektrischen Pressen nach einem der vorstehenden Ansprüche, **dadurch gekennzeichnet,**
**dass** mehrere zu einer Presse gehörende Stößel (3) mit ein oder mehreren Druckpunkten (7) steuerbar sind.

9. Verfahren zur Steuerung und Regelung der Stößelbewegung an servo-elektrischen Pressen nach einem der vorstehenden Ansprüche, **dadurch gekennzeichnet,**
**dass** mehrere zu einer Pressenanlage gehörende Pressen mit jeweils mindestens einem Stößel (3) und deren zugeordnete Druckpunkte (7) steuerbar sind.

10. Verfahren zur Steuerung und Regelung der Stößelbewegung an servo-elektrischen Pressen nach einem der vorstehenden Ansprüche, **dadurch gekennzeichnet,**
**dass** die Kraftbegrenzung durch ein von der Position der Leitwelle (30) abhängiges Kraftsollwertprofil beeinflussbar ist.

11. Verfahren zur Steuerung und Regelung der Stößelbewegung an servo-elektrischen Pressen nach einem der vorstehenden Ansprüche, **dadurch gekennzeichnet,**
**dass** die Federung der Antriebselemente für jeden Druckpunkt (7) durch einen drehmoment- oder kraftabhängigen Offset auf die Sollposition beeinflussbar ist.

12. Verfahren zur Steuerung und Regelung der Stößelbewegung an servo-elektrischen Pressen nach einem der vorstehenden Ansprüche, **dadurch gekennzeichnet,**
**dass** die Federung der Antriebselemente durch eine dieselbe an jedem Druckpunkt (7) messende Sensorik beeinflussbar ist.

13. Verfahren zur Steuerung und Regelung der Stößelbewegung an servo-elektrischen Pressen nach einem der vorstehenden Ansprüche, **dadurch gekennzeichnet,**
**dass** die Federung der Antriebselemente für jeden Druckpunkt (7) durch einen drehmoment- oder kraftabhängigen Offset auf die Sollposition und einen die Federung an jedem Druckpunkt (7) messende Sensorik beeinflussbar ist.

14. Verfahren zur Steuerung und Regelung der Stößelbewegung an servo-elektrischen Pressen nach einem der vorstehenden Ansprüche, **dadurch gekennzeichnet,**
**dass** die Drehzahl der virtuellen Leitwelle (30) in Abhängigkeit von der Regelabweichung des Lage- oder Geschwindigkeitsreglers (32, 33) beeinflussbar ist.

15. Verfahren zur Steuerung und Regelung der Stößelbewegung an servo-elektrischen Pressen nach einem der vorstehenden Ansprüche, **dadurch gekennzeichnet,**
**dass** die Drehzahl der virtuellen Leitwelle (30) in Abhängigkeit der auftretenden Momente oder Kräfte der Druckpunkte (7) des Stößels (3) beeinflussbar ist.

16. Verfahren zur Steuerung und Regelung der Stößelbewegung an servo-elektrischen Pressen nach einem der vorstehenden Ansprüche, **dadurch gekennzeichnet,**
**dass** die Positions-Kurvenscheiben (20) jeweils für die Bewegung der Stößel (3) einer Pressen-Anlage durch eine jeder Presse zugeordneten und untereinander synchronisierten Leitwelle (30) steuerbar sind.

17. Verfahren zur Steuerung und Regelung der Stößelbewegung an servo-elektrischen Pressen nach einem der vorstehenden Ansprüche, **dadurch gekennzeichnet,**
**dass** die Positions-Kurvenscheiben (20) jeweils für die Bewegung der Stößel (3) einer Pressen-Anlage durch eine gemeinsame Leitwelle (30) steuerbar sind.

18. Vorrichtung zur Steuerung und Regelung der Stößelbewegung an servo-elektrischen Pressen, bei denen die Positionen, Geschwindigkeiten und Drehmomente oder Kräfte der Servomotoren (1.1, 1.2) mittels einer NC-Steuereinrichtung (58) steuerbar sind, **dadurch gekennzeichnet,**

**dass** die dem/den Servomotor/en (1.1, 1.2) zum Antrieb des/ oder der Druckpunkte (7) eines oder mehrerer Stößel (3) zugeordnete Achsregeleinrichtung (29) einerseits einen Lageregler (32) aufweist, der im Fall mit lagegebundener Reversierbewegung im Bereich des unteren Umkehrpunktes seinen Sollwert von der leitwellengesteuerten Kurvenscheibensteuereinrichtung (3) oder von der Funktionseinheit zur Berechnung der rotatorischen Motorposition (44) summiert mit dem in der Funktionseinheit zur Korrektur der Federung (47) ermittelten Positions-Offset $S_{korr} = f(M)$ erhält und andererseits eine Funktionseinheit zur Momentenbegrenzung (34) aufweist, die im Fall mit kraftgebundener Reversierbewegung im Bereich des unteren Umkehrpunktes ihren Sollwert von der Funktionseinheit zur Vorgabe des Momentengrenzwertes (46) erhält.

**19.** Vorrichtung zur Steuerung und Regelung der Stößelbewegung an servo-elektrischen Pressen nach Anspruch 18, **dadurch gekennzeichnet,**
**dass** die Funktionseinheit zur Korrektur der Federung 47 über die Rückführung des Momenten-Istwertes mit dem Momenten-/Stromregler 36 wirkverbunden ist.

**20.** Vorrichtung zur Steuerung und Regelung der Stößelbewegung an servo-elektrischen Pressen nach Anspruch 18, **dadurch gekennzeichnet,**
**dass** die Funktionseinheit zur Vorgabe der Leitwellendrehzahl 39 über die Rückführung des Momenten-Istwertes mit dem Momenten-/Stromregler 36 wirkverbunden ist.

**21.** Vorrichtung zur Steuerung und Regelung der Stößelbewegung an servo-elektrischen Pressen nach Anspruch 18, **dadurch gekennzeichnet,**
**dass** die NC-Steuereinrichtung (58) bedarfsweise Funktionseinheiten zur Berechnung der rotatorischen Motorposition (44), zur Ermittlung des Vorschubfaktors (45) und zur Korrektur der Federung (47) enthält.

**22.** Vorrichtung zur Steuerung und Regelung der Stößelbewegung an servo-elektrischen Pressen nach Anspruch 18, **dadurch gekennzeichnet,**
**dass** die Positions-Kurvenscheiben (20) die Sollpositionen des Stößels (3) oder der Druckpunkte (7) beinhalten.

**23.** Vorrichtung zur Steuerung und Regelung der Stößelbewegung an servo-elektrischen Pressen nach Anspruch 18, **dadurch gekennzeichnet,**
**dass** die Positions-Kurvenscheiben (20) die Sollpositionen der Servomotore (1.1, 1.2 ) oder der direkt an diese gekoppelten Getriebe (2.1, 2.2) beinhalten.

**24.** Vorrichtung zur Steuerung und Regelung der Stößelbewegung an servo-elektrischen Pressen nach Anspruch 18, **dadurch gekennzeichnet,**
**dass** die Positions-Kurvenscheiben (20) die Sollpositionen für einen Zyklus (51,52) oder mehrere Zyklen (51,52) beinhalten.

**25.** Vorrichtung zur Steuerung und Regelung der Stößelbewegung an servo-elektrischen Pressen nach Anspruch 18, **dadurch gekennzeichnet,**
**dass** der Lageregelkreis jeweils einen jedem Druckpunkt (7) zugeordneten Längenmesssensor beinhaltet.

**26.** Vorrichtung zur Steuerung und Regelung der Stößelbewegung an servo-elektrischen Pressen nach Anspruch 25, **dadurch gekennzeichnet,**
**dass** zur Vorsteuerung des Lageregelkreises der in der Funktionseinheit zur Korrektur der Federung (47) ermittelte Positions-Offset verwendet wird.

**Claims**

**1.** Method for controlling and regulation of the ram movement on servo-electric presses in which the positions, speeds and forces or torques of the servomotors (1.1, 1.2) can be controlled by means of an NC control device (58), **characterized in that** the setpoint torques for the servomotor or the servomotors (1.1, 1.2) for driving the pressure point or the pressure points (7) of one or more rams (3) can be controlled in dependence on influencing variables, such as the transmission ratio $i = f (\varphi)$ depending on the position of the main shaft, and/or the force-dependent resilience $s_{corr} = f (F_{act}, M_{act})$, by means of a position cam disc (20) which is controlled by a virtual main shaft (30), with it being possible, in the case of a position-associated reversing movement in the region of the lower reversal point, for the position cam disc (20) to be acted upon by correction values in the form of a force-dependent position offset, and with, in the case of a force-associated reversing movement in the region of the lower reversal point, the switchover between position control and force control taking place either by evaluation of a maximum system deviation of the position controller (32) or speed controller (33) or by the variation of the position cam disc (20) below the ram position (21), which is enforced by the tool, in conjunction with a force or torque limit value (35).

2. Method for controlling and regulation of the ram movement on servo-electric presses according to Claim 1, **characterized in that**, before the beginning of the method sequence, in the first preparation phase (10), the machine-specific variation of the transmission ratio is stored in the NC control device (58), **in that**, in the second preparation phase (11), the part-specific setpoint variation for the position of the pressure points (7) is entered in, calculated and stored in the NC control device (58) as a position cam disc (20), and **in that**, in the method step (13), a virtual main shaft (30) is generated during the ram movement, and the ram position can be influenced by a position control which receives its setpoint value from a position cam disc (20) read in accordance with the virtual main shaft (30).

3. Method for controlling and regulation of the ram movement on servo-electric presses according to Claim 1, **characterized in that,** before the beginning of the method sequence, in the first preparation phase (10) the machine-specific variation of the transmission ratio is stored in the NC control device (58), **in that**, in the second preparation phase (11), the part-specific setpoint variations for the position and the force are entered in dependence on the position of the main shaft (30), calculated and stored in the NC control device (58) as a position cam disc (20) and as a force or torque limit value (35), **in that**, in the first method step (13), a virtual main shaft (30) is generated during the ram movement, and the ram position can be influenced by a position control which receives its setpoint value from a position cam disc (20) read in accordance with the virtual main shaft (30);
   **in that**, in the second method step (15), when the first switchover condition (14) is met, a switch is made to force or torque control, **in that**, in the third method step (16), after the first switchover condition (14) is met, a force or torque control takes place and, in addition, the virtual main shaft (30) is also generated, and **in that**, in the fourth method step (18), when the second switchover condition (17) is met, at the beginning of the running up (28) of the ram a switch is made again to position control with the position cam disc (20), and the sequence of movements is cyclically continued with the first method step (13).

4. Method for controlling and regulation of the ram movement on servo-electric presses according to Claim 1, **characterized in that**, before the beginning of the method sequence, in the first preparation phase (10) the machine-specific variations of the transmission ratio and of the resilience of the drive elements are stored in the NC control device (58), **in that**, in the second preparation phase (11), the part-specific setpoint variations for the position and, depending on the operating mode, the force are entered in dependence on the position of the main shaft (30), calculated and stored in the NC control device (58) as a position cam disc (20) and, depending on the operating mode, as a force or torque limit value (35), **in that**, in the first method step (13), a virtual main shaft (30) is generated during the ram movement, a force-dependent position offset is calculated for each pressure point (7) and the ram position can be influenced by a position control which receives its setpoint value from a position cam disc (20) read in accordance with the virtual main shaft (30) and from the respective position offset, **in that**, in the method step (16), the force or torque limit value (35) is issued, depending on the operating mode, and, in addition, the virtual main shaft (30) is also generated, and **in that**, in the method step (18), upon achievement of the force or torque limit value (35) depending on the operating mode, the running up (28) of the ram follows by means of position control via the position cam disc (20), and the sequence of movements is cyclically continued with the first method step (13).

5. Method for controlling and regulation of the ram movement on servo-electric presses according to Claim 1, **characterized in that**, before the beginning of the method sequence, in the first preparation phase (10) the machine-specific variation of the transmission ratio is stored in the NC control device (58), **in that**, in the second preparation phase (11), the part-specific setpoint variations for the position and, depending on the operating mode, the force are entered in dependence on the position of the main shaft (30), calculated and stored in the NC control device (58) as a position cam disc (20) and, depending on the operating mode, as a force or torque limit value (35), **in that**, in the first method step (13), a virtual main shaft (30) is generated during the ram movement, and the ram position can be influenced by a position control which receives its setpoint value from a position cam disc (20) read in accordance with the virtual main shaft (30) and from the actual positions measured from the resilience of the individual pressure points (7), **in that**, in the method step (16), the force or torque limit value (35) is issued, depending on the operating mode, and, in addition, the virtual main shaft (30) is also generated, and **in that**, in the method step (18), upon achievement of the force or torque limit value (35) depending on the operating mode, the running up (28) of the ram follows by means of position control via the position cam disc (20), and the sequence of movements is cyclically continued with the first method step (13).

6. Method for controlling and regulation of the ram movement on servo-electric presses according to Claim 1, **characterized in that,** before the beginning of the method sequence, in the first preparation phase (10) the machine-specific variations of the transmission ratio and of the resilience of the drive elements are stored in the NC control device (58), **in that**, in the second preparation phase (11), the part-specific setpoint variations for the position and, depending on the operating mode, the force are entered in dependence on the position of the main shaft (30), calculated and stored in the NC control device (58) as a position cam disc (20) and, depending on the operating mode, as a force or torque limit value (35), **in that**, in the first method step (13), a virtual main shaft (30) is generated during the ram movement, a force-dependent position offset is calculated for each pressure point (7) and the ram position can be influenced by a position control which receives its setpoint value from a position cam disc (20) read in accordance with the virtual main shaft (30), and from the respective position offset and the actual positions measured from the resilience of the individual pressure points (7), **in that**, in the method step (16), the force or torque limit value (35) is issued, depending on the operating mode, and, in addition, the virtual main shaft (30) is also generated, and **in that**, in the method step (18), upon achievement of the force or torque limit value (35) depending on the operating mode, the running up (28) of the ram follows by means of position control via the position cam disc (20), and the sequence of movements is cyclically continued with the first method step (13).

7. Method for controlling and regulation of the ram movement on servo-electric presses according to one of the preceding claims, **characterized in that** one or more pressure points (7) of a ram (3) belonging to a press can be controlled.

8. Method for controlling and regulation of the ram movement on servo-electric presses according to one of the preceding claims, **characterized in that** a plurality of rams (3) belonging to a press can be controlled by one or more pressure points (7).

9. Method for controlling and regulation of the ram movement on servo-electric presses according to one of the preceding claims, **characterized in that** a plurality of presses belonging to a press installation can be controlled by in each case at least one ram (3) and the associated pressure points (7) thereof.

10. Method for controlling and regulation of the ram movement on servo-electric presses according to one of the preceding claims, **characterized in that** the force limiting can be influenced by a force setpoint value profile dependent on the position of the main shaft (30).

11. Method for controlling and regulation of the ram movement on servo-electric presses according to one of the preceding claims, **characterized in that** the resilience of the drive elements for each pressure point (7) can be influenced by a torque- or force-dependent offset with respect to the setpoint position.

12. Method for controlling and regulation of the ram movement on servo-electric presses according to one of the preceding claims, **characterized in that** the resilience of the drive elements can be influenced by a sensor arrangement measuring said resilience at each pressure point (7).

13. Method for controlling and regulation of the ram movement on servo-electric presses according to one of the preceding claims, **characterized in that** the resilience of the drive elements for each pressure point (7) can be influenced by a torque- or force-dependent offset with respect to the setpoint position and a sensor arrangement measuring the resilience at each pressure point (7).

14. Method for controlling and regulation of the ram movement on servo-electric presses according to one of the preceding claims, **characterized in that** the rotational speed of the virtual main shaft (30) can be influenced depending on the system deviation of the position controller or speed controller (32, 33).

15. Method for controlling and regulation of the ram movement on servo-electric presses according to one of the preceding claims, **characterized in that** the rotational speed of the virtual main shaft (30) can be influenced depending on the torques or forces occurring at the pressure points (7) of the ram (3).

16. Method for controlling and regulation of the ram movement on servo-electric presses according to one of the preceding claims, **characterized in that** the position cam discs (20) can each be controlled for the movement of the rams (3) of a press installation by a main shaft (30) which is assigned to each press, said main shafts being synchronized with one another.

17. Method for controlling and regulation of the ram movement on servo-electric presses according to one of the preceding claims, **characterized in that** the position cam discs (20) can each be controlled for the movement of the rams (3) of a press installation by a common main shaft (30).

18. Apparatus for controlling and regulation of the ram movement on servo-electric presses in which the positions, speeds and torques or forces of the servomotors (1.1, 1.2) can be controlled by means of an NC control device (58), **characterized in that** the axis control device (29) assigned to the servomotor(s) (1.1, 1.2) for driving the pressure point or the pressure points (7) of one or more rams (3) firstly has a position controller (32) which, in the case of a position-associated reversing movement in the region of the lower reversal point, receives its setpoint value from the main-shaft-controlled cam disc control device (3) or from the functional unit for calculating the rotary motor position (44) added to the position offset $s_{corr} = f(M)$ determined in the functional unit for the correction of the resilience (47), and secondly has a functional unit for the torque limitation (34), which, in the case of a force-associated reversing movement in the region of the lower reversal point, receives its setpoint value from the functional unit for stipulating the torque limit value (46).

19. Apparatus for controlling and regulation of the ram movement on servo-electric presses according to Claim 18, **characterized in that** the functional unit for the correction of the resilience (47) is operatively connected to the torque/current controller (36) via the feedback of the actual value of the torque.

20. Apparatus for controlling and regulation of the ram movement on servo-electric presses according to Claim 18, **characterized in that** the functional unit for stipulating the rotational speed (39) of the main shaft is operatively connected to the torque/current controller (36) via the feedback of the actual value of the torque.

21. Apparatus for controlling and regulation of the ram movement on servo-electric presses according to Claim 18, **characterized in that,** if required, the NC control device (58) contains functional units for calculating the rotatory motor position (44), for determining the advancing factor (45) and for correcting the resilience (47).

22. Apparatus for controlling and regulation of the ram movement on servo-electric presses according to claim 18, **characterized in that** the position cam discs (20) contain the setpoint positions of the ram (3) or of the pressure points (7).

23. Apparatus for controlling and regulation of the ram movement on servo-electric presses according to Claim 18, **characterized in that** the position cam discs (20) contain the setpoint positions of the servomotors (1.1, 1.2) or of the transmissions (2.1, 2.2) directly coupled thereto.

24. Apparatus for controlling and regulation of the ram movement on servo-electric presses according to Claim 18, **characterized in that** the position cam discs (20) contain the setpoint positions for one cycle (51, 52) or more than one cycle (51, 52).

25. Apparatus for controlling and regulation of the ram movement on servo-electric presses according to Claim 18, **characterized in that** the position control circuit in each case contains a length measuring sensor assigned to each pressure point (7).

26. Apparatus for controlling and regulation of the ram movement on servo-electric presses according to Claim 25, **characterized in that**, in order to precontrol the position control circuit, use is made of the position offset determined in the functional unit for correcting the resilience (47).

**Revendications**

1. Procédé de commande et de régulation du déplacement du poussoir de presses servo-électriques, dans lequel les positions, les vitesses et les forces ou couples de rotation des servo-moteurs (1.1, 1.2) peuvent être commandés au moyen d'un dispositif de commande NC (58), **caractérisé en ce que**

les couples de rotation de consigne pour le ou les servo-moteurs (1.1, 1.2) qui entraînent le ou les points de poussée (7) d'un ou de plusieurs poussoirs (3) en fonction de grandeurs d'influence, par exemple le rapport de transmission i = f(φ) en fonction de la position de l'arbre de guidage et/ou l'amortissement $S_{korr} = f(F_{ist}, M_{ist})$ en fonction de la force peuvent être régulés au moyen d'une came de position (20) commandée par un arbre de guidage virtuel (30),

tandis qu'en cas de déplacement de retour lié à la position dans la zone du point inférieur d'inversion, la came de position (20) peut recevoir des valeurs de correction sous la forme d'un décalage de position en fonction de la force et qu'en cas de déplacement de retour lié à la force dans la zone du point inférieur d'inversion, la commutation entre la régulation de position et la régulation de force s'effectue soit par évaluation de l'écart maximum de réglage du régulateur de position (32) ou du régulateur de vitesse (33) soit

par la courbe de la came de position (20) en dessous de la position (21) du poussoir forcée par l'outil, en association avec une valeur limite (35) de force ou de couple.

2.  Procédé de commande et de régulation du déplacement du poussoir de presses servo-électriques selon la revendication 1,
**caractérisé en ce que**

avant le début de l'exécution du procédé, dans la première phase de préparation (10), l'évolution spécifique à la machine du rapport de transmission est conservée en mémoire dans le dispositif de commande NC (58),
**en ce que** dans la deuxième phase de préparation (11), l'évolution de consigne spécifique à une pièce de la position des points de poussée (7) est introduite, calculée et conservée en mémoire dans le dispositif de commande NC (58) comme came de position (20), et
**en ce que** dans l'étape de procédé (13), pendant le déplacement du poussoir, un arbre virtuel de guidage (30) est formé et la position du poussoir peut être influencée par une régulation de position qui reçoit sa valeur de consigne d'une came de position (20) lue en correspondance à l'arbre virtuel de guidage (30).

3.  Procédé de commande et de régulation du déplacement du poussoir de presses servo-électriques selon la revendication 1,
**caractérisé en ce que**

avant le début de l'exécution du procédé, dans la première phase de préparation (10), l'évolution spécifique à la machine du rapport de transmission est conservée en mémoire dans le dispositif de commande NC (58),
**en ce que** dans la deuxième phase de préparation (11), les évolutions de consigne, spécifiques aux pièces, de la position et de la force sont introduites en fonction de la position de l'arbre de guidage (30), sont calculées et sont conservées en mémoire dans le dispositif de commande NC (58) comme cames de position (20) et valeurs limites de force et de couple (35),
**en ce que** dans la première étape (13) du procédé, pendant le déplacement du poussoir, un arbre virtuel de guidage (30) est formé et la position du poussoir peut être influencée par une régulation de position qui reçoit sa valeur de consigne d'une came de position (20) lue en correspondance à l'arbre virtuel de guidage (30),
**en ce que** dans la deuxième étape (15) du procédé, lorsque la première condition de commutation (14) est satisfaite, on commute sur la régulation de force ou de couple de rotation,
**en ce que** dans la troisième étape (16) du procédé, lorsque la première condition de commutation (14) est satisfaite, on effectue une régulation de force ou de couple de rotation et en outre on forme l'arbre virtuel de guidage (30) et
**en ce que** dans la quatrième étape (18) du procédé, lorsque la deuxième condition de commutation (17) est satisfaite, au début du relèvement du poussoir (28), on commute de nouveau sur la régulation de position avec came de position (20) et le déroulement du déplacement est poursuivi cycliquement en repassant à la première étape (13) du procédé.

4.  Procédé de commande et de régulation du déplacement du poussoir de presses servo-électriques selon la revendication 1,
**caractérisé en ce que**

avant le début de l'exécution du procédé, dans la première phase de préparation (10), les évolutions spécifiques à la machine du rapport de transmission et de l'amortissement des éléments d'entraînement sont conservées en mémoire dans le dispositif de commande NC (58),
**en ce que** dans la deuxième phase de préparation (11), les évolutions de consigne, spécifiques aux pièces, de la position et de la force en fonction du type de fonctionnement sont introduites en fonction de la position de l'arbre de guidage (30), sont calculées et sont conservées en mémoire dans le dispositif de commande NC (58) comme cames de position (20) et, en fonction du type de fonctionnement, comme valeurs limites de force ou de couple (35),
**en ce que** dans la première étape (13) du procédé, pendant le déplacement du poussoir, un arbre virtuel de guidage (30) est formé, un décalage de position en fonction de la force est calculé pour chaque point de poussée (7) et la position du poussoir peut être influencée par une régulation de position qui reçoit sa valeur de consigne d'une came de position (20) lue en correspondance à l'arbre virtuel de guidage (30) et au décalage de position particulier,

**en ce que** dans l'étape (16) du procédé, en fonction du type de fonctionnement, la valeur limite de force ou de couple (35) est délivrée et de plus l'arbre virtuel de guidage (30) est formé et

**en ce que** dans l'étape (18) du procédé, lorsque la valeur limite de force ou de couple (35) a été atteinte en fonction du type de fonctionnement, le relèvement (28) du poussoir est engagé par régulation de la position par l'intermédiaire de la came de position (20) et le déroulement du déplacement est poursuivi cycliquement en repassant à la première étape (13) du procédé.

5. Procédé de commande et de régulation du déplacement du poussoir de presses servo-électriques selon la revendication 1,
   **caractérisé en ce que**

   avant le début de l'exécution du procédé, dans la première phase de préparation (10), l'évolution spécifique à la machine du rapport de transmission est conservée en mémoire dans le dispositif de commande NC (58),
   **en ce que** dans la deuxième phase de préparation (11), les évolutions de consigne spécifiques aux pièces de la position et de la force en fonction du type de fonctionnement sont introduites en fonction de la position de l'arbre de guidage (30), sont calculées et sont conservées en mémoire dans le dispositif de commande NC (58) comme cames de position (20) et, en fonction du type de fonctionnement, comme valeurs limites de force ou de couple (35),
   **en ce que** dans la première étape (13) du procédé, pendant le déplacement du poussoir, un arbre virtuel de guidage (30) est formé et la position du poussoir peut être influencée par une régulation de position qui reçoit sa valeur de consigne d'une came de position (20) lue en correspondance à l'arbre virtuel de guidage (30) et aux positions effectives mesurées à partir de l'amortissement des différents points de poussée (7),
   **en ce que** dans l'étape (16) du procédé, en fonction du type de fonctionnement, la valeur limite de force ou de couple (35) est délivrée et en outre l'arbre virtuel de guidage (30) est formé et
   **en ce que** dans l'étape (18) du procédé, lorsque la valeur limite de force ou de couple (35) en fonction du type de fonctionnement a été atteinte, le relèvement du poussoir (28) est exécuté au moyen d'une régulation de position par l'intermédiaire de la came de position (20) et le déroulement du déplacement est poursuivi cycliquement en repassant à la première étape (13) du procédé.

6. Procédé de commande et de régulation du déplacement du poussoir de presses servo-électriques selon la revendication 1,
   **caractérisé en ce que**

   avant le début de l'exécution du procédé, dans la première phase de préparation (10), les évolutions spécifiques à la machine du rapport de transmission et de l'amortissement des éléments d'entraînement sont conservées en mémoire dans le dispositif de commande NC (58),
   **en ce que** dans la deuxième phase de préparation (11), les évolutions de consigne spécifiques aux pièces de la position et de la force en fonction du type de fonctionnement sont introduites en fonction de la position de l'arbre de guidage (30), sont calculées et sont conservées en mémoire dans le dispositif de commande NC (58) comme cames de position (20) et, en fonction du type de fonctionnement, comme valeurs limites de force ou de couple (35),
   **en ce que** dans la première étape (13) du procédé, pendant le déplacement du poussoir, un arbre virtuel de guidage (30) est formé, un décalage de position en fonction de la force est calculé pour chaque point de poussée (7) et la position du poussoir peut être influencée par une régulation de position qui reçoit sa valeur de consigne d'une came de position (20) lue en correspondance à l'arbre virtuel de guidage (30), au décalage de position particulier et aux positions effectives mesurées à partir de l'amortissement des différents points de poussée (7),
   **en ce que** dans l'étape (16) du procédé, en fonction du type de fonctionnement, la valeur limite de force ou de couple (35) est délivrée et en outre l'arbre virtuel de guidage (30) est formé et
   **en ce que** dans l'étape (18) du procédé, lorsque la valeur limite de force ou de couple (35) en fonction du type de fonctionnement a été atteinte, le relèvement du poussoir (28) est exécuté au moyen d'une régulation de position par l'intermédiaire de la came de position (20) et le déroulement du déplacement est poursuivi cycliquement en repassant à la première étape (13) du procédé.

7. Procédé de commande et de régulation du déplacement du poussoir de presses servo-électriques selon l'une des revendications précédentes, **caractérisé en ce qu'**un ou plusieurs points de poussée (7) d'un poussoir (3) qui fait partie d'une presse peuvent être commandés.

8. Procédé de commande et de régulation du déplacement du poussoir de presses servo-électriques selon l'une des revendications précédentes, **caractérisé en ce que** plusieurs poussoirs (3) appartenant à une presse et présentant un ou plusieurs points de poussée (7) peuvent être commandés.

9. Procédé de commande et de régulation du déplacement du poussoir de presses servo-électriques selon l'une des revendications précédentes, **caractérisé en ce que** plusieurs presses qui font partie d'une installation de presse et qui présentent toutes au moins un poussoir (3) et leurs points de poussée (7) associés peuvent être commandées.

10. Procédé de commande et de régulation du déplacement du poussoir de presses servo-électriques selon l'une des revendications précédentes, **caractérisé en ce que** la limitation de la force peut être influencée par un profil des valeurs de consigne de force qui dépend de la position de l'arbre de guidage (30).

11. Procédé de commande et de régulation du déplacement du poussoir de presses servo-électriques selon l'une des revendications précédentes, **caractérisé en ce que** l'amortissement des éléments d'entraînement de chaque point de poussée (7) peut être influencé par un décalage de la position de consigne en fonction du couple de rotation ou de la force.

12. Procédé de commande et de régulation du déplacement du poussoir de presses servo-électriques selon l'une des revendications précédentes, **caractérisé en ce que** l'amortissement des éléments d'entraînement peut être influencé par un ensemble de détecteurs qui mesurent cet amortissement en chaque point de poussée (7).

13. Procédé de commande et de régulation du déplacement du poussoir de presses servo-électriques selon l'une des revendications précédentes, **caractérisé en ce que** l'amortissement des éléments d'entraînement pour chaque point de poussée (7) peut être influencé par un décalage en fonction du couple de rotation ou de la force de la position de consigne et par un ensemble de détecteurs qui mesurent l'amortissement en chaque point de poussée (7).

14. Procédé de commande et de régulation du déplacement du poussoir de presses servo-électriques selon l'une des revendications précédentes, **caractérisé en ce que** la vitesse de rotation de l'arbre virtuel de guidage (30) peut être influencée en fonction de l'écart de réglage du régulateur de position ou du régulateur de vitesse (32, 33).

15. Procédé de commande et de régulation du déplacement du poussoir de presses servo-électriques selon l'une des revendications précédentes, **caractérisé en ce que** la vitesse de rotation de l'arbre virtuel de guidage (30) peut être influencée en fonction des couples ou forces exercés par les points de poussée (7) du poussoir (3).

16. Procédé de commande et de régulation du déplacement du poussoir de presses servo-électriques selon l'une des revendications précédentes, **caractérisé en ce que** les cames de position (20) pour les déplacements des poussoirs (3) d'une installation de presse peuvent toutes être commandées par des arbres de guidage (30) associés à chaque presse et synchronisés entre eux.

17. Procédé de commande et de régulation du déplacement du poussoir de presses servo-électriques selon l'une des revendications précédentes, **caractérisé en ce que** les cames de position (20) prévues pour les déplacements des poussoirs (3) d'une installation de presse peuvent être commandés par un arbre de guidage (30) commun.

18. Dispositif de commande et de régulation du déplacement du poussoir de presses servo-électriques, dans lesquels les positions, les vitesses et les couples de rotation ou forces des servo-moteurs (1.1, 1.2) peuvent être commandés au moyen d'un dispositif de commande NC (58),
    **caractérisé en ce que**

    le dispositif de régulation d'axe (29) associé aux servo-moteurs (1.1, 1.2) pour l'entraînement du ou des points de poussée (7) d'un ou plusieurs poussoirs (3) présente d'une part un régulateur de position (32) qui, en cas de déplacement de retour associé à la position dans la zone du point inférieur d'inversion, reçoit sa valeur de consigne du dispositif (3) de commande de came commandé par l'arbre de guidage ou de l'unité fonctionnelle de calcul de la position en rotation (44) du moteur additionné au décalage de position $S_{korr}$ = f(M) déterminé dans l'unité fonctionnelle pour corriger l'amortissement (47) et d'autre part présente une unité fonctionnelle de limitation du couple (34) qui, en cas de déplacement de retour lié à la force dans la zone du point inférieur d'inversion, reçoit sa valeur de consigne de l'unité fonctionnelle pour déterminer la valeur limite du couple (46).

**19.** Dispositif de commande et de régulation du déplacement du poussoir de presses servo-électriques selon la revendication 18, **caractérisé en ce que** l'unité fonctionnelle qui corrige l'amortissement (47) est reliée fonctionnellement au régulateur de couple ou de courant (36) par l'intermédiaire de la rétroaction de la valeur effective du couple.

**20.** Dispositif de commande et de régulation du déplacement du poussoir de presses servo-électriques selon la revendication 18, **caractérisé en ce que** l'unité fonctionnelle qui définit la vitesse de rotation (39) de l'arbre de guidage est reliée fonctionnellement au régulateur de couple ou de courant (36) par l'intermédiaire de la rétroaction de la valeur effective du couple.

**21.** Dispositif de commande et de régulation du déplacement du poussoir de presses servo-électriques selon la revendication 18, **caractérisé en ce que** le dispositif de commande NC (58) contient si nécessaire des unités fonctionnelles de calcul de la position en rotation (44) du moteur, pour déterminer le facteur d'avancement (45) et la correction de l'amortissement (47).

**22.** Dispositif de commande et de régulation du déplacement du poussoir de presses servo-électriques selon la revendication 18, **caractérisé en ce que** les cames de position (20) contiennent les positions de consigne du poussoir (3) ou des points de poussée (7).

**23.** Dispositif de commande et de régulation du déplacement du poussoir de presses servo-électriques selon la revendication 18, **caractérisé en ce que** les cames de position (20) contiennent les positions de consigne du servo-moteur (1.1, 1.2) ou des transmissions (2.1, 2.2) qui leurs sont directement accouplées.

**24.** Dispositif de commande et de régulation du déplacement du poussoir de presses servo-électriques selon la revendication 18, **caractérisé en ce que** les cames de position (20) contiennent les positions de consigne pour un cycle (51, 52) ou pour plusieurs cycles (51, 52).

**25.** Dispositif de commande et de régulation du déplacement du poussoir de presses servo-électriques selon la revendication 18, **caractérisé en ce que** le circuit de régulation de position contient un détecteur de mesure de longueur associé à chaque point de poussée (7).

**26.** Dispositif de commande et de régulation du déplacement du poussoir de presses servo-électriques selon la revendication 25, **caractérisé en ce que** pour la précommande de la boucle de régulation de position, on utilise le décalage de position déterminé dans l'unité fonctionnelle de correction de l'amortissement (47).

**Fig. 1**

Fig. 2

Fig. 3

EP 1 917 564 B1

Fig. 4

Fig. 5

24

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19642962 A1
- DE 19806751 A1
- JP 2004058152 A
- JP 2003230996 A
- JP 2003340600 A
- DE 19952941 A1
- DE 19753949 A1
- EP 1321285 A2
- US 6246201 B1